# EUROPÄISCHE PATENTANMELDUNG

(11) **EP 3 760 340 A1**
(43) Veröffentlichungstag der Anmeldung: **06.01.2021**
(21) Anmeldenummer: 19184212.9
(22) Anmeldetag: 03.07.2019
(51) Int. Cl.: B22D 41/56

(54) **EINRICHTUNG ZUM MANIPULIEREN VORZUGSWEISE EINES GIESSROHRS BEI EINER WECHSELVORRICHTUNG AM AUSGUSS EINES METALLURGISCHEN BEHÄLTERS**

(71) Anmelder: Refractory Intellectual Property GmbH & Co. KG, 1100 Wien (AT)
(72) Erfinder: Renggli, Raphael, CH-6343 Rotkreuz (CH)
(74) Vertreter: Luchs, Willi

(57) **Zusammenfassung**

Bei einer Einrichtung zum Manipulieren vorzugsweise eines Giessrohrs (7) bei einer Wechselvorrichtung (8) am Ausguss eines metallurgischen Behälters erfolgt dieses Manipulieren mittels eines Roboters (10). Dieser Roboter weist einen befestigbaren Sockel (9), einen an diesem schwenkbaren Tragarm (12) und wenigstens einen an letzterem drehbar gelagerten Verlängerungsarm (13) mit einem Greifer (14) vorzugsweise für das Giessrohr (7) auf. Der Sockel (9) des Roboters (10) ist derart neben dem Behälter befestigt, dass der Tragarm (12) seitlich beim Behälter in eine nach unten gerichtete Position schwenkbar ist und der wenigstens eine an ihm gelagerte Verlängerungsarm (13) entlang der Unterseite des Behälters bewegbar ist. Damit ergibt sich eine optimale Platzierung des Roboters und damit der Einrichtung, so dass diese den Zugang des Personals zu dem Verteiler auf der Giessbühne während dem Giessen nicht beeinträchtigt und mit der Einrichtung die entsprechenden Manipulationen, wie ein Giessrohrwechsel, sehr einfach und betriebssicher automatisiert ausgeführt werden können.

## Beschreibung

Die Erfindung betrifft eine Einrichtung zum Manipulieren vorzugsweise eines Giessrohrs bei einer Wechselvorrichtung am Ausguss eines metallurgischen Behälters, wobei dieses Manipulieren mittels eines Roboters erfolgt, welcher einen befestigbaren Sockel, einen an diesem schwenkbaren Tragarm und wenigstens einen an letzterem drehbar gelagerten Verlängerungsarm mit einem Greifer vorzugsweise für das Giessrohr aufweist.

Eine Einrichtung gemäss der Druckschrift EP-A-2 056 983 dient zur Wartung eines am Ausguss eines Behälters für Metallschmelze montierten Schiebeverschlusses. Diese Anlage ist mit mindestens einem Werkzeugmagazin und mit Mitteln zum Öffnen und Schliessen des Schiebeverschlusses versehen. Es ist ein mit einem automatischen Greifwechselsystem versehener und mit einer Steuerung wirkverbundener Roboter vorhanden, mittels dem die exakte Position des Behälters bzw. des Schiebeverschlusses selbsttätig bestimmt werden kann. Danach kann er den Schiebeverschluss betätigen und diesen öffnen und schliessen, und je nach Zustand der einzelnen zu ersetzenden Komponenten aus den ihn umgebenden Magazinen Werkzeuge bzw. Ersatzteile ergreifen und Reinigungsarbeiten, Komponentenausbau sowie deren Ersatz oder Wiedereinbau durchführen. Dieser Roboter ist robust ausgelegt und an einem von der Giessbühne entfernten Pfannenplatz installiert.

Der Erfindung liegt die Aufgabe zugrunde, eine Einrichtung nach der eingangs genannten Art zu schaffen, mittels der ein Wechsel von Giessrohren und/oder anderen Manipulationen auf der Giessbühne einer Anlage insbesondere während dem Giessen automatisiert durchgeführt werden können, und der verwendete Roboter dabei optimal platziert ist.

Diese Aufgabe ist erfindungsgemäss nach den Merkmalen des Anspruchs 1 gelöst.

Mit dieser erfindungsgemässen Anordnung des Roboters durch eine derartige Befestigung des Sockels neben dem Behälter, so dass sein Tragarm seitlich beim Behälter in eine nach unten gerichtete Position schwenkbar ist und der wenigstens eine an ihm gelagerte Verlängerungsarm entlang der Unterseite des Behälters bewegbar ist, ergibt sich eine optimale Platzierung des Roboters und damit der Einrichtung, so dass diese den Zugang des Personals zu dem Verteiler auf der Giessbühne während dem Giessen nicht beeinträchtigt und mit der Einrichtung die entsprechenden Manipulationen, wie ein Giessrohrwechsel, sehr einfach und betriebssicher automatisiert ausgeführt werden können. Mit der vorgesehenen Anordnung der Einrichtung wird ausserdem ein für das Personal geschützter Bereich auf der Giessbühne ermöglicht.

Diese Vorteile ergeben sich grundsätzlich, wenn der Roboter bei einem fest installierten Verteiler oder vorteilhaft auf einem den Verteiler verschiebenden Wagen montiert ist.

Für den An- und Ausbau des Roboters am Verteilerwagen und zur Anpassung seiner Position an die konstruktiven Merkmale des Verteilers ist es besonders vorteilhaft, den Sockel des Roboters an der Unterseite eines Gestänges oder ähnlichem auf der Rückseite des Verteilerwagens anzubringen. Das ermöglicht das Montieren des Roboters in der optimalen Einbaulage, ohne den Gesamtaufbau der Verteilerwagens zu verändern.

Es ist insbesondere bei Verteilern mit zwei oder mehreren Ausgüssen vorteilhaft, wenn pro Ausguss je ein Roboter verwendet wird.

Die erfindungsgemässe Einrichtung eignet sich für einen Giessrohrwechsel bei Erreichen eines kritischen Verschleisses des jeweiligen im Einsatz befindlichen feuerfesten Giessrohrs einer an sich bekannten Wechselvorrichtung . Zu diesem Zwecke ist der Roboter mit einer Steuerung für seine Manipulationsbewegungen versehen, mittels welcher ein Entnehmen des vorgewärmten neuen Giessrohrs von einer Vorwärmstation, ein Ausrichten und Einschieben desselben in die Wechselvorrichtung und ein Entfernen des alten Giessrohrs aus ihr automatisiert ausführbar ist.

Der erfindungsgemässe Roboter ist vorzugsweise auch für zusätzliche oder alternative Manipulationen als den Giessrohrwechsel auf der Giessbühne bei den metallurgischen Behältern einsetzbar.

Die Erfindung ist nachfolgend anhand von Ausführungsbeispielen unter Bezugnahme auf die Zeichnung näher erläutert. Es zeigen:
- Fig. 1: einen perspektivisch dargestellten als Behälter vorgesehenen Verteiler mit einer erfindungsgemässen Einrichtung zum Manipulieren eines Giessrohrs bei einer Wechselvorrichtung; und
- Fig. 2: perspektivisch den Verteiler und die Einrichtung gemäss Fig. 1 bei der Entnahme eines Giessrohrs von einer Vorwärmstation.

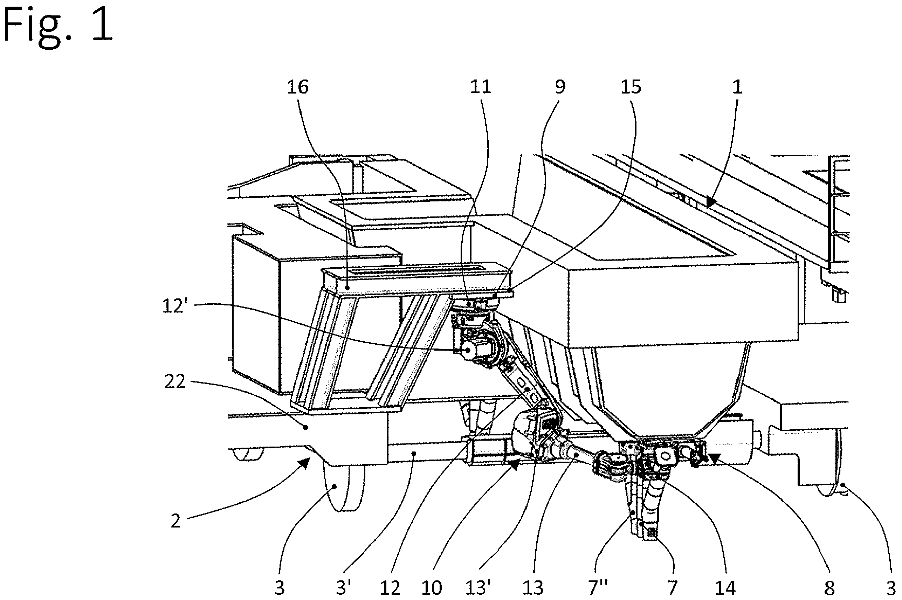

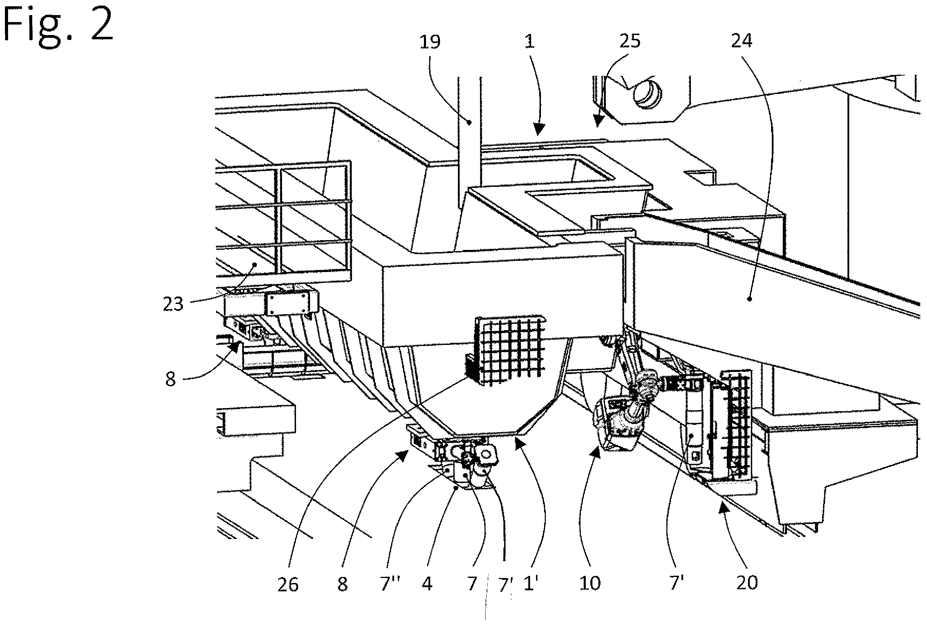

Fig. 1 und Fig. 2 zeigen einen Verteiler 1 als metallurgischen Behälter, der bei einer Stranggiessanlage für das kontinuierliche Zuführen der Stahlschmelze in Kokillen 4 von Giesssträngen verwendet wird. Es wird von einer nicht dargestellten Pfanne oberhalb dieses Verteilers 1 der flüssige Stahl durch ein feuerfestes Schattenrohr 19 zugeführt und der Verteiler gefüllt.

Im Prinzip könnte es sich aber um einen andern Behälter als um einen Verteiler handeln, wie zum Beispiel um eine Pfanne oder auch um einen solchen im Nichteisenmetallbereich, bei dem Manipulationen beim Ausguss oder bei Gasspülvorrichtungen ausgeführt werden können.

Der Verteiler 1 ist auf einen fahrbaren Wagen 2 gestellt und kann durch diesen in die Giessposition oberhalb der Kokillen 4 oder weg von dieser Giessposition verschoben werden. Dieser Wagen 2 umfasst im Wesentlichen einen Wagenboden 22, eine Bühne 23, eine Ablaufrinne 24 und auf Schienen laufende Räder 3 mit Radachsen 3'. Es ist damit die Vorderseite mit der Bühne 23 für den Zugang des Personals während dem Giessen ermöglicht, und es ist eine Rückseite 25 des Verteilers 1 gegeben, bei der sich üblicherweise ein Drehturm für die Pfanne befindet.

An den beiden zueinander beabstandeten Ausgüssen an der Unterseite 1' des Verteilers 1 ist je eine an sich bekannte Wechselvorrichtung 8 montiert, weiche jeweils ein feuerfestes Giessrohr 7 aufnimmt, das in eine Kokille 4 eingetaucht ist und ermöglicht, dass die Schmelze luftdicht vom Verteiler in diese Kokille geleitet wird. Mit dieser Wechselvorrichtung 8 kann das Giessrohr im Giesszustand gehalten und ausserdem ein verbrauchtes Giessrohr 7" durch ein neues Giessrohr 7' ersetzt werden. Zur besseren Veranschaulichung sind jeweils diese drei Giessrohre beim Wechseln gezeigt und in Fig. 1 ist überdies das neu einzuführende Giessrohr 7' in der Stellung beim Eintauchen in die Kokille veranschaulicht. Es wird diesbezüglich auf die Druckschrift EP 2 663 413 B1 verwiesen, in der so eine Wechselvorrichtung im Detail erläutert ist.

Darüberhinaus ist eine Einrichtung mit einem Roboter 10 zum Manipulieren der Giessrohre 7, 7', 7" bei der Wechselvorrichtung 8 vorgesehen. Dieser Roboter 10 setzt sich aus einem Sockel 9, einem an diesem schwenkbaren Tragarm 12 und einen an letzterem drehbar gelagerten Verlängerungsarm 13 mit einem Greifer 14 für das Giessrohr 7 zusammen. Zudem ist am Sockel 9 ein um eine Vertikalachse rotierbares Drehlager 11 mit dem an diesem schwenkbaren Tragarm 12 angeordnet. Damit kann dieser Roboter 10 um sechs Achsen, nämlich in x-, y-, z- Richtung plus drei zusätzliche Drehrichtungen bewegt werden.

Zur Ausstattung des Roboters 10 gehören ferner mechanische, hydraulische und/oder elektrische Antriebselemente 12', 13' zum Schwenken und Drehen seiner beweglichen Bauteile sowie Positionierungssensoren, die mit einer Steuereinheit verbunden sind. Durch eine auf bekannte Art erfolgende Steuerung kann der Roboter automatisiert betrieben und es können die entsprechenden Manipulationsabläufe programmgesteuert durchgeführt werden, bei der primär ein Entnehmen eines vorgewärmten neuen Giessrohrs 7' von einer Vorwärmstation 20, ein Ausrichten und Einschieben desselben in die Wechselvorrichtung 8 sowie ein Entfernen des alten Giessrohrs 7" automatisiert ausführbar sind.

Erfindungsgemäss ist der Sockel 9 des Roboters 10 derart neben dem Verteiler 1 befestigt, dass der Tragarm 12 seitlich beim Verteiler 1 in eine nach unten gerichtete Position schwenkbar ist und der wenigstens eine an ihm gelagerte Verlängerungsarm 13 entlang der Unterseite 1' des Verteilers 1 bewegbar ist.

Damit kann der an sich als eine fertige Einheit käufliche Roboter 10 auf sehr einfache Weise kopfüber neben dem Verteiler 1 einfach montiert und die gewünschten Manipulationen durch diese optimal Platzierung präzis ausgeführt werden.

Der Sockel 9 des Roboters 10 ist dabei auf dem Wagen 2 seitlich neben dem Verteiler 1 im oberen Bereich befestigt und der Roboter ist damit zusammen mit dem Wagen verschiebbar. Zweckmässigerweise weist der Wagen 2 ein Gestänge 16 auf, bei dem eine von unten zugängliche Auflagefläche 15 für die Befestigung des Sockels 9 des Roboters 10 gebildet ist, wobei dieses Gestänge 16 und damit der Roboter 10 auf der Rückseite 25 des Verteilers 1 angeordnet sind. Das Gestänge 16 besteht dabei aus einer stabilen Profilkonstruktion oder ähnlichem. Diese Auflagefläche 15 ist etwas unterhalb der oberen Seite des Verteilers 1 positioniert, wobei sich dies an den Abmessungen des Verteilers bzw. der Länge des Tragarms 12 orientiert.

Aufgrund der zwei zueinander beabstandeten Ausgüssen auf der Unterseite 1' des Verteilers 1 sind beide mit je einer Wechselvorrichtung 8 und je einem Roboter 10 ausgestattet, wobei die beiden Roboter auf dem Wagen auf der Rückseite 25 oben neben dem Verteiler bei den Ausgüssen befestigt sind. Im Prinzip könnte auch nur ein Roboter für beide Wechselvorrichtungen 8 vorgesehen sein, der entsprechend vom einen zum andern verschiebbar geführt sein müsste.

Die erwähnte Vorwärmstation 20 für die Giessrohre 7' ist derart auf der Rückseite 25 des Verteilers 1 angeordnet, dass mittels des Roboters 10 ein jeweiliges vorgewärmtes Giessrohrs 7' von dieser Vorwärmstation 20 entnehmbar und zur Wechselvorrichtung 8 bringbar ist. Diese Vorwärmstation 20 ist dabei auf bekannte Weise ausgestaltet und daher nicht mehr im Detail erläutert. Die Giessrohre sind in dieser Vorwärmstation so anzuordnen, dass der Greifer 14 ein jeweiliges Giessrohr 7' direkt entnehmen kann.

Der Roboter 10 ist ausserdem durch seine Anordnung auf der Rückseite 25 des Verteilers 1 sehr gut geschützt und es kann mit einem angedeuteten seitlichen Abschirmgitter 26 bei diesem verhindert werden, dass das Personal im Betriebszustand des Roboters in seine Arbeitszone gelangen kann.

Darüberhinaus zeichnet sich der Roboter 10 dadurch aus, dass er für zusätzliche oder alternative Manipulationen als den Giessrohrwechsel einsetzbar ist. So kann er gleichsam zum Zuführen von Giesspulver oder dergleichen in die Kokille 4 aus einem in der Nähe angebrachten Magazin eingesetzt werden.

Der erfindungsgemässe Roboter 10 eignet sich auch zum Manipulieren anderer vergleichbarer Verschleissteile bei Behältern der Anlage, wie beispielweise eines feuerfesten Spülsteins in einem Pfannenboden oder eines feuerfesten Schattenrohrs am Ausguss eines Schiebeverschlusses an der Pfanne oberhalb des Verteilers.

Die Erfindung ist mit dem obigen Ausführungsbeispiel ausreichend dargetan. Sie könnte aber noch durch weitere Varianten ausgeführt sein. So könnte der Roboter auch wie eine einfachere Manipulatorvorrichtung ausgestaltet sein. Zudem könnte der die Metallschmelze enthaltende Behälter auch nicht auf einem Wagen 2 verschiebbar sein, sondern er könnte insbesondere ohne oder mit dem Roboter 10 mittels eines Krans oder dergleichen transportiert werden.

Im Prinzip könnte der Sockel 9 und das an diesem um eine Achse rotierbare Drehlager 11 mit seiner Achse auch nicht senkrecht nach unten, sondern in einem Winkel schräg nach unten oder annähernd horizontal ausgerichtet sein, so dass aber der am Drehlager angelenkte Tragarm 12 zumindest annähernd senkrecht nach unten schwenkbar ist und ermöglicht, dass der Verlängerungsarm 13 am Tragarm 12 unterhalb des Verteilers bewegbar ist.

Ebenso könnte der Sockel des Roboters nicht an einem separaten Gestänge, sondern anderweitig am Wagen oder an anderer Stelle fixiert sein.

Anstelle einer Wechselvorrichtung von Giessrohren könnte in bekannter Weise eine solche für feuerfeste Freilaufdüsen vorgesehen sein, bei der Freilaufdüsen ebenfalls durch den Roboter 10 entsprechend eingesetzt bzw. gewechselt würden.

Der Roboter könnte selbstverständlich je nach Ausbildung und Anforderungen der Giessanlage anders ausgebildet sein. Er könnte vereinfacht nur mit einem Sockel, einen an diesem nur um eine Ebene schwenkbaren Tragarm und dem Verlängerungsarm mit dem Greifer bestehen. Es könnten aber auch zwei Trag- bzw. Verlängerungsarme vorgesehen sein.

Auch der Greifer kann unterschiedlich ausgestaltet sein, je nach seiner Verwendung. So kann er zum Beispiel mit Greiffingern oder als Tragmittel oder ähnlichem ausgebildet sein.

## Patentansprüche

1. Einrichtung zum Manipulieren vorzugsweise eines Giessrohrs bei einer Wechselvorrichtung am Ausguss eines metallurgischen Behälters, wobei dieses Manipulieren mittels eines Roboters (10) erfolgt, welcher einen befestigbaren Sockel (9), einen an diesem schwenkbaren Tragarm (12) und wenigstens einen an letzterem drehbar gelagerten Verlängerungsarm (13) mit einem Greifer (14) vorzugsweise für das Giessrohr (7) aufweist, **dadurch gekennzeichnet, dass**
der Sockel (9) des Roboters (10) derart neben dem Behälter befestigt ist, dass der Tragarm (12) seitlich beim Behälter in eine nach unten gerichtete Position schwenkbar ist und der wenigstens eine an ihm gelagerte Verlängerungsarm (13) entlang der Unterseite des Behälters bewegbar ist.

2. Einrichtung nach Anspruch 1, **dadurch gekennzeichnet, dass** der Behälter als Verteiler (1) ausgebildet ist, der auf einem Wagen (2) in die oder weg von der Giessposition verschiebbar ist, wobei der Sockel (9) des Roboters (10) auf dem Wagen (2) seitlich im oberen Bereich neben dem Verteiler (1) befestigt ist und damit der Roboter (10) zusammen mit dem Wagen (2) verschiebbar ist.

3. Einrichtung nach Anspruch 2, **dadurch gekennzeichnet, dass** der Verteiler (1) mit mindestens zwei zueinander beabstandeten Ausgüssen mit je einer Wechselvorrichtung (8) und je einem Roboter (10) versehen ist.

4. Einrichtung nach Anspruch 2 oder 3, **dadurch gekennzeichnet, dass**
der Wagen (2) ein Gestänge (16) aufweist, bei dem eine von unten zugängliche Auflagefläche (15) für die Befestigung des Sockels (9) des Roboters (10) gebildet ist, wobei dieses Gestänge (16) und damit der Roboter (10) auf der Rückseite (25) des Verteilers (1) angeordnet ist.

5. Einrichtung nach einem der Ansprüche 1 bis 4, **dadurch gekennzeichnet, dass**
am Sockel (9) ein um eine Vertikalachse rotierbares Drehlager (11) mit dem an diesem schwenkbaren Tragarm (12) angeordnet ist.

6. Einrichtung nach einem der Ansprüche 1 bis 5, **dadurch gekennzeichnet, dass**
der Roboter (10) mit einer Steuerung für seine Manipulationsbewegungen versehen ist, mittels welcher ein Entnehmen des vorgewärmten neuen Giessrohrs (7') von einer Vorwärmstation (20), ein Ausrichten und Einschieben desselben in die Wechselvorrichtung (8) sowie ein Entfernen des alten Giessrohrs (7") automatisiert ausführbar ist.

7. Einrichtung nach Anspruch 6, **dadurch gekennzeichnet, dass** diese Vorwärmstation (20) für die Giessrohre (7') derart rückseitig beim Verteiler (1) angeordnet ist, dass mittels des Roboters (10) ein jeweiliges vorgewärmtes Giessrohrs (7') von dieser entnehmbar und zur Wechselvorrichtung (8) bringbar ist.

8. Einrichtung nach einem der Ansprüche 1 bis 7, **dadurch gekennzeichnet, dass**
der Roboter (10) für zusätzliche oder alternative Manipulationen als den Giessrohrwechsel auf der Giessbühne mit den metallurgischen Behälter einsetzbar ist.

9. Einrichtung nach Anspruch 8, **dadurch gekennzeichnet, dass** der Roboter (10) zum Entnehmen von Giesspulver oder dergleichen aus einem Magazin und Zuführen des Pulvers in eine Kokille (4) mit dem darin eingetauchten Giessrohr (7) während des Giessens einsetzbar ist.

10. Einrichtung nach Anspruch 8 oder 9, **dadurch gekennzeichnet, dass**
der Roboter (10) zum Auswechseln eines feuerfesten Spülsteins im Boden eines Behälters einsetzbar ist.
